# EUROPEAN PATENT APPLICATION

(11) **EP 4 581 989 A1**
(43) Date of publication of application: **09.07.2025**
(21) Application number: 24192764.9
(22) Date of filing: 05.08.2024
(51) Int. Cl.: A47J 36/32, A47J 37/06

(54) **COOKING CONTROL METHOD, APPARATUS, DEVICE AND STORAGE MEDIUM**

(30) Priority: 05.01.2024 CN 202410025227
(71) Applicant: Foshan Shunde Midea Electrical Heating Appliances Manufacturing Co., Ltd., Foshan, Guangdong 528311 (CN)
(72) Inventor: LI, Yong, Foshan, 528311 (CN); ZHANG, Jianhua, Foshan, 528311 (CN); He, Yidong, Foshan, 528311 (CN); Xu, Shaocheng, Foshan, 528311 (CN)
(74) Representative: RGTH

(57) **Abstract**

The present application discloses a cooking control method, apparatus, device and storage medium, applied to a cooking device. The cooking control method includes: in response to the cooking signal, controlling the heating device to heat the cooking pot so that the cooking device enters the first cooking stage; acquiring the steam temperature in the cooking pot; if the steam temperature is greater than or equal to the first temperature threshold and less than the second temperature threshold, controlling the circulation fan to work; if the steam temperature is greater than or equal to the second temperature threshold, controlling the cooking device to enter the second cooking stage, power of the heating device in the second cooking stage is less than that in the first cooking stage, so that the food is heated more evenly and the problem of partially cooked food is improved.

## Description

### TECHNICAL FIELD

The present application relates to the technical field of electrical appliance control, and in particular to a cooking control method, apparatus, device and storage medium.

### BACKGROUND

With the continuous development of cooking devices, people have higher requirements for cooking devices.

Currently, when the cooking device is cooking, the liquid and food in the cooking device are heated unevenly, which can easily lead to the food not being fully cooked and affect the user experience.

### SUMMARY

In view of the above problems, the present application provides a cooking control method, apparatus, device and storage medium to improve the above problems.

According to a first aspect, an embodiment of the present application provides a cooking control method, applied to a cooking device, comprising:
in response to a cooking signal, controlling a heating device to heat a cooking pot, so that the cooking device enters a first cooking stage;
acquiring a steam temperature in the cooking pot;
controlling a circulation fan to operate, in response to that the steam temperature is greater than or equal to a first temperature threshold and less than a second temperature threshold; or
controlling the cooking device to enter a second cooking stage, in response to that the steam temperature is greater than or equal to the second temperature threshold, power of the heating device in the second cooking stage is less than power in the first cooking stage.

The cooking device comprises a pot body, and the cooking pot, the heating device and the circulation fan located in the pot body, the heating device is located between the cooking pot and the pot body, and the circulation fan is opposite to an opening of the cooking pot.

In some embodiments, the cooking control method also comprises: in response to that the steam temperature is less than the first temperature threshold, controlling the circulation fan to work in a first mode;
in response to that the steam temperature is greater than or equal to the first temperature threshold and less than the second temperature threshold, controlling the circulation fan to work, comprises:
in response to the steam temperature is greater than or equal to the first temperature threshold and less than the second temperature threshold, controlling the circulation fan to work in a second mode, an average rotation speed of the circulation fan in the second mode is greater than an average rotation speed in the first mode.

In some embodiments, controlling the circulation fan to work in the second mode comprises: controlling the circulation fan to rotate periodically.

In some embodiments, controlling the circulation fan to rotate periodically comprises:
controlling the circulation fan to rotate for a first period of time, and controlling the circulation fan to stop rotating for a second period of time, the circulation fan rotates and stops rotating alternately.

In some embodiments, the cooking control method also comprises:
in response to that the steam temperature is less than the first temperature threshold, controlling the circulation fan to stop working.

In some embodiments, the cooking control method also comprises:
in response to that the steam temperature is greater than or equal to the first temperature threshold and less than the second temperature threshold, acquiring a heating time of the heating device; and
in response to that the heating time is greater than or equal to a preset duration, controlling the cooking device to enter the second cooking stage.

In some embodiments, the cooking control method also comprises:
in response to that the heating time is less than the preset duration, reacquiring the steam temperature in the cooking pot.

According to a second aspect, an embodiment of the present application provides a cooking control apparatus, applied to a cooking device, and the cooking device comprises a pot body, and a cooking pot, a heating device and a circulation fan located in the pot body, the heating device is located between the cooking pot and the pot body, and the circulation fan is opposite to an opening of the cooking pot.

The cooking control apparatus comprises a first control module, an acquisition module, a second control module and a third control module.

The first control module is to control a heating device to heat a cooking pot in response to a cooking signal, so that the cooking device enters a first cooking stage.

The acquisition module is to acquire a steam temperature in the cooking pot.

The second control module is to control a circulation fan to work in response to that the steam temperature is greater than or equal to a first temperature threshold and less than a second temperature threshold.

The third control module is to control the cooking device to enter a second cooking stage in response to that the steam temperature is greater than or equal to the second temperature threshold, power of the heating device in the second cooking stage is less than power in the first cooking stage.

According to a third aspect, an embodiment of the present application provides a cooking device, comprising:
a pot body;
a cooking pot, a heating device and a circulation fan located in the pot body, the heating device is located between the cooking pot and the pot body, and the circulation fan is opposite to an opening of the cooking pot;
at least one processor; and
a memory communicated with the at least one processor.

An instruction executable by the at least one processor is stored in the memory, and the instruction is executed by the at least one processor to enable the at least one processor to perform the cooking control method according to any one of the embodiments as described above.

According to a fourth aspect, an embodiment of the present application provides a computer-readable storage medium, program code is stored in the computer-readable storage medium, and the program code is called by a processor to perform the cooking control method according to any one of of the embodiments as described above.

In the cooking control method, apparatus, device and storage medium provided by the present application, the cooking control method is applied to the cooking device. The cooking device comprises a pot body, a cooking pot, a heating device and a circulation fan located in the pot body. The heating device is located between the cooking pot and the pot body. The circulation fan is opposite to the opening of the cooking pot. The cooking control method comprises: in response to the cooking signal, controlling the heating device to heat the cooking pot, so that the cooking device enters the first cooking stage; obtaining the steam temperature in the cooking pot; if the steam temperature is greater than or equal to the first temperature threshold and less than the second temperature threshold, controlling the circulation fan to operate; if the steam temperature is greater than or equal to the second temperature threshold, controlling the cooking device to enter the second cooking stage, and the power of the heating device in the second cooking stage is less than that in the first cooking stage, so that the cooking device controls the circulation fan to rotate when the steam temperature is greater than or equal to the first temperature threshold and less than the second temperature threshold. At this time, if the steam temperature is close to the first temperature threshold, when the circulation fan rotates, it can drive the air flow in the cooking pot to achieve the effect of removing staleness from food, and can also stir the liquid and food (such as rice grains) in the cooking pot to allow the food to roll in the liquid, so that the food is heated more evenly and the problem of partially cooked food is improved. When the steam temperature is close to the second temperature threshold, bubbles are easily generated in the cooking pot. When the circulation fan rotates, it can drive the air flow in the cooking pot to destroy the bubbles.

### BRIEF DESCRIPTION OF THE DRAWINGS

In order to more clearly illustrate the technical solutions in the embodiments of the present application, the accompanying drawings needed to be used in the description of the embodiments will be briefly introduced below. Obviously, the accompanying drawings in the following description are only some rather than all of the embodiments of the present application. Based on the embodiments of the present application, all other embodiments and drawings obtained by those skilled in the art without any creative effort fall within the scope of the present application.
FIG. 1 is a schematic structural diagram of a cooking device according to an embodiment of the present application.
FIG. 2 is another schematic structural diagram of the cooking device in FIG. 1.
FIG. 3 is a schematic flowchart of a cooking control method according to an embodiment of the present application.
FIG. 4 is a schematic structural diagram of a cooking control apparatus according to an embodiment of the present application.
FIG. 5 is a schematic structural diagram of a cooking device according to another embodiment of the present application.
FIG. 6 is a structural block diagram of a computer-readable storage medium according to an embodiment of the present application.

### DETAILED DESCRIPTION OF THE EMBODIMENTS

In order to enable those in the technical field to better understand the solution of the present application, the technical solution in the embodiment of the present application will be clearly and completely described below in conjunction with the drawings in the embodiment of the present application.

The embodiments of the present application provide a cooking control method, apparatus, device and storage medium. The cooking control method is applied to a cooking device. The cooking device comprises a pot body, and a cooking pot, a heating device and a circulating fan located in the pot body. The heating device is located between the cooking pot and the pot body, and the circulating fan is opposite to an opening of the cooking pot. The cooking control method comprises: in response to a cooking signal, controlling the heating device to heat the cooking pot so that the cooking device enters a first cooking stage; obtaining a steam temperature in the cooking pot; if the steam temperature is greater than or equal to a first temperature threshold and less than a second temperature threshold, controlling the circulating fan to work; if the steam temperature is greater than or equal to the second temperature threshold, controlling the cooking device to enter a second cooking stage. The power of the heating device in the second cooking stage is less than the power in the first cooking stage, so that when the steam temperature is greater than or equal to the first temperature threshold and less than the second temperature threshold, the cooking device controls the circulating fan to rotate. At this time, if the steam temperature is close to the first temperature threshold, when the circulating fan rotates, it can drive the air flow in the cooking pot, to prevent staleness of the food. In addition, when the circulating fan rotates, it can also stir the liquid and food (such as rice grains) in the cooking pot, allowing the food to roll in the liquid. The circulating fan can also stir the rice-water mixture through the wind to speed up the heat exchange between the upper and lower layers, allowing the food to be heated more evenly and improving the problem of partially cooked food. When the steam temperature is close to the second temperature threshold, bubbles are easily generated in the cooking pot. When the circulating fan rotates, it can drive the air flow in the cooking pot to destroy the bubbles.

The technical solutions in the embodiments of the present application will be clearly and completely described below with reference to the accompanying drawings in the embodiments of the present application.

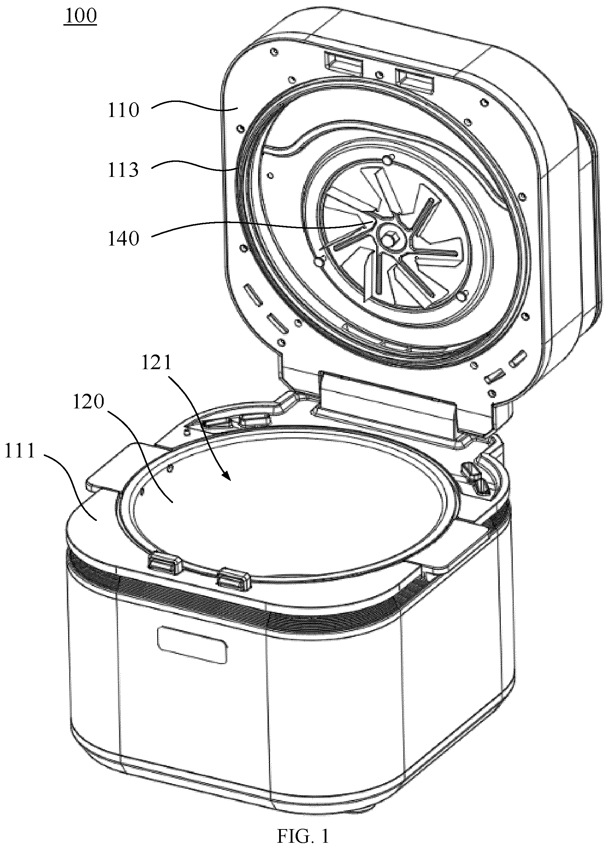

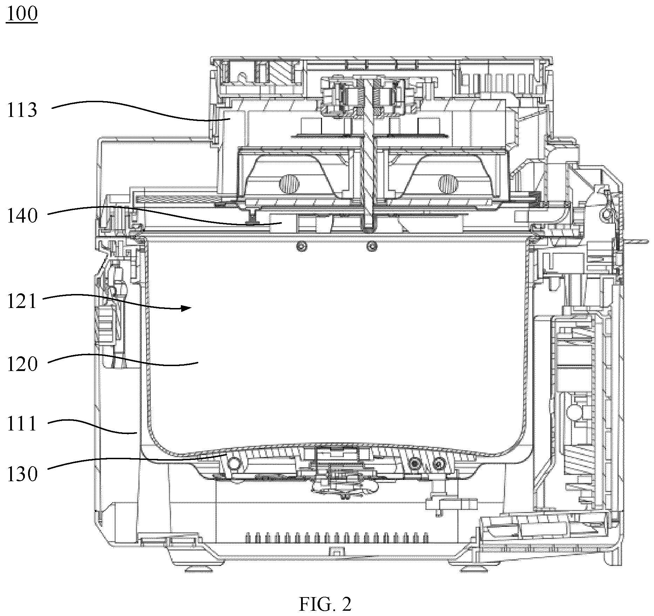

Referring to FIG. 1 to FIG. 2, an embodiment of the present application provides a cooking device 100. The cooking device 100 comprises a pot body 110, a cooking pot 120, a heating device 130 and a circulation fan 140. The cooking pot 120, the heating device 130 and the circulation fan 140 are all located in the pot body 110, and the heating device 130 is located between the pot body 110 and the cooking pot 120 to heat the cooking pot 120. The circulation fan 140 is opposite to the opening of the cooking pot 120, so that when the circulation fan 140 is working, it can blow air into the cooking pot 120 and drive the air flow in the cooking pot 120 to destroy bubbles and help prevent the generation of bubbles.

The cooking device 100 can be an air fryer, an oven, a rice cooker, a stew pot, an electric pressure cooker, a steam rice cooker, etc., which is not limited in the present application. For convenience of description, the following is described with the cooking device 100 as an example of an air fryer.

In some embodiments, the pot body 110 can comprise a pot body 111 and a pot cover 113. The pot body 111 can be covered with the pot cover 113. The cooking pot 120, the heating device 130 and the circulation fan 140 are all located between the pot cover 113 and the pot body 111.

In some embodiments, the pot body 111 can be connected to the pot cover 113 in various ways. For example, the pot cover 113 can be hinged to the pot body 111, or the pot cover 113 and the pot body 111 can also be separate structures, or the pot body 111 and the pot cover 113 can be connected in other connection methods.

In some embodiments, a heating space can be provided inside the pot body 111, and both the heating device 130 and the cooking pot 120 are located in the heating space.

In some embodiments, the heating device 130 can be located between a bottom wall of the cooking pot 120 and the bottom wall of the pot body 110, so that the food in the cooking pot 120 is more easily heated.

In other embodiments, the heating device 130 can also be located between a side wall of the cooking pot 120 and the side wall of the pot body 110.

In other embodiments, multiple heating devices 130 can be provided, and the multiple heating devices 130 can be distributed between the bottom wall of the cooking pot 120 and the bottom wall of the pot body 110, as well as between the side wall of the cooking pot 120 and the side wall of the pot body 110, thereby improving the heating efficiency and increasing the cooking speed of the cooking device 100.

In some embodiments, the heating device 130 can be a heating tube, a heating plate, an electromagnetic heating element, or other heating element or device.

In some embodiments, the circulation fan 140 can be connected to the pot cover 113. It can be understood that when the pot cover 113 is installed on the pot body 111, the circulation fan 140 can be located inside the cooking pot 120, or the circulation fan 140 can be located outside the cooking pot 120 and opposite to the opening of the cooking pot 120, or the circulation fan 140 can be partially located inside the cooking pot 120.

In some embodiments, an inner wall of the cooking pot 120 can be provided with a liquid capacity prompt mark for prompting the user, such as a water level line.

In some embodiments, the cooking device 100 can also comprise a motor. The motor can be installed inside the pot cover 113. A drive shaft of the motor can extend outside the pot cover 113. The circulation fan 140 can be connected to the drive shaft, so that the motor can control the circulation fan 140 to rotate.

In some embodiments, a cooking space 121 can be provided in the cooking pot 120, and the cooking space 121 can be used to place food.

It can be understood that when the pot cover 113 is installed on the pot body 111, the cooking space 121 can refer to the space between the cooking pot 120 and the pot cover 113. When the pot cover 113 is installed on the pot body 111, the cooking space 121 can be sealed. This helps to improve the problem of steam loss when the cooking device 100 is cooking.

In some embodiments, the cooking device 100 can also comprise a temperature detection unit. The temperature detection unit can be provided in the cooking space 121. For example, the temperature detection unit can be provided on the pot cover 113, so that the temperature detection unit can obtain the steam temperature inside the cooking pot 120.

The temperature detection unit can be a temperature detection device such as a temperature sensor or a thermometer.

In some embodiments, the pot body 110 can be provided with an exhaust hole, and the exhaust hole can discharge steam in the cooking space 121 to relieve pressure. The temperature detection unit can be located in the exhaust hole, so that the temperature detection unit can obtain the steam temperature in the cooking pot 120.

In some embodiments, the cooking device 100 can also comprise a controller, which can be located in the pot body 110 and can be used to control the working status of the circulation fan 140 and the heating device 130. The controller can also obtain a detection value of the temperature detection unit, and control the working status of the circulation fan 140 and the heating device 130 according to the detection value. The controller can be used to perform any step in the cooking control method of any of the following embodiments.

The controller can use microcontroller unit (MCU), microprocessor unit (MPU), central processing unit (CPU), etc.

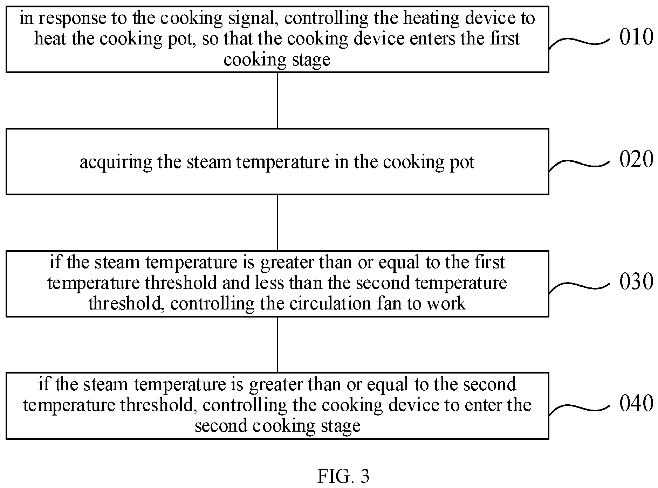

Referring to FIG. 3, an embodiment of the present application also provides a cooking control method. The cooking control method is applied to the cooking device 100 of any of the above embodiments. The cooking control method comprises step 010, step 020, step 030, and step 040.

Step 010, in response to the cooking signal, controlling the heating device to heat the cooking pot, so that the cooking device enters the first cooking stage.

In some embodiments, the cooking signal can be triggered by the user, and the controller interacts with the user to obtain the user's input operation, and then obtains the cooking signal. For example, the cooking device can be provided with an interactive panel, and the user can click buttons or options related to sending the cooking signal in the interactive panel (such as buttons or touch screens, etc.). Alternatively, the user can also trigger the cooking signal by sending a preset specific voice, infrared control, sending specific instructions through a mobile terminal, etc.

In some embodiments, upon receiving the cooking signal, the cooking device enters a cooking mode.

In some embodiments, after the cooking is completed, the cooking device can also send a prompt to the user to complete the cooking. For example, after cooking is completed, a prompt sound, voice announcement, light flashing, etc. will be sent.

In some embodiments, the heating device can use electromagnetic heating, heating chassis heating, heating tube heating, etc. to heat the cooking pot, which is not limited in the present application.

Step 020, acquiring the steam temperature in the cooking pot.

The steam temperature in the cooking pot can refer to the steam temperature in the cooking pot detected directly through the temperature detection unit, the temperature detection unit being located in the cooking pot, or can refer to the steam temperature in the exhaust hole detected through the temperature detection unit when the steam in the cooking pot flows to the exhaust hole, the temperature detection unit being located in the exhaust hole.

It can be understood that the steam temperature is generally lower than the temperature of the liquid in the cooking pot. By obtaining the steam temperature, the embodiment of the present application can ensure that the temperature of the liquid in the cooking pot is higher than the detected steam temperature, thereby improving the fault tolerance rate of the cooking control method.

Step 030, if the steam temperature is greater than or equal to the first temperature threshold and less than the second temperature threshold, controlling the circulation fan to work.

In the embodiment of the present application, after the heating device heats the cooking pot, the cooking device enters the first cooking stage, obtains the steam temperature, and determines the steam temperature. When the steam temperature is greater than or equal to the first temperature threshold and less than the second temperature threshold, the circulation fan is controlled to operate. At this time, if the steam temperature is close to the first temperature threshold, when the circulation fan rotates, it can drive the air flow in the cooking pot to prevent staleness of food, and it can also stir the liquid and food (such as rice grains) in the cooking pot, so that the food can roll in the liquid. The circulation fan can also stir the rice-water mixture through the wind to speed up the heat exchange between the upper and lower layers, so that the food is heated more evenly, solving the problem of partially cooked food. When the steam temperature is close to the second temperature threshold, bubbles are easily generated in the cooking pot. When the circulation fan rotates, it can drive the air flow in the cooking pot to destroy the bubbles.

In some implementations, the second temperature threshold is greater than the first temperature threshold.

In some embodiments, when the steam temperature is greater than or equal to the first temperature threshold and less than the second temperature threshold, it is determined that the cooking device is in the first cooking stage. At this time, the operating power of the heating device is relatively large and bubbles are easily generated. The circulation fan rotates during the first cooking stage to drive air flow in the cooking pot, thus preventing the formation of air bubbles.

In some embodiments, the first temperature threshold and the second temperature threshold can be preset according to actual conditions. The first temperature threshold can be 35°C, and the second temperature threshold can be 80°C. When the steam temperature is greater than or equal to 35°C and less than 80°C, for example, when the steam temperature is 35°C, 50°C, 68°C, 71°C or 79°C, the cooking device controls the circulation fan to start rotating.

In addition, the cooking device can adjust the working mode of the circulation fan according to the steam temperature.

In some embodiments, the cooking control method further comprises:
if the steam temperature is less than the first temperature threshold, controlling the circulation fan to operate in the first mode.

In addition, step 030 can comprise: if the steam temperature is greater than or equal to the first temperature threshold and less than the second temperature threshold, controlling the circulation fan to operate in the second mode.

The average speed of the circulation fan in the second mode is greater than the average speed in the first mode.

In some embodiments, the difference between the first mode and the second mode may be a difference in the rotation speed or a difference in the operating power. For example, the rotation speed of the circulation fan in the second mode is greater than the rotation speed in the first mode.

After acquiring the cooking signal, the cooking device controls the heating device to start heating the cooking pot and controls the circulation fan to start rotating. In order to reduce the power consumption of the circulation fan, when the cooking device has not entered the first cooking stage, the liquid in the cooking pot is difficult to generate bubbles. At this time, the cooking device can reduce the rotation speed of the circulation fan, reduce the energy consumption of the cooking device, and the circulation fan works in the first working mode, the rotation speed of the circulation fan is the first rotation speed. When the cooking device enters the first cooking stage, in order to provide greater wind power, the cooking device can increase the rotation speed of the circulation fan. The circulation fan provides greater wind power, which can achieve a better effect of preventing staleness of food and can destroy the surface tension of the bubbles faster. This helps prevent the liquid from generating bubbles or destroying the generated bubbles. At this time, the circulation fan works in the second working mode, and the rotation speed of the circulation fan is the second rotation speed, and the second rotation speed is greater than the first rotation speed.

In some embodiments, the first rotation speed and the second rotation speed can be preset according to needs. In an embodiment, the first rotation speed can be less than 2000 rpm, for example, the first rotation speed can be set to 1900 rpm, 1800 rpm, or 1650 rpm, etc. The second rotational speed can be greater than or equal to 2000rpm and less than or equal to 5000rpm. For example, the second rotational speed can be set to 2000rpm, 3500rpm or 5000rpm, etc.

It can be understood that when the cooking device does not enter the first cooking stage, the energy consumption of the cooking device can be further reduced.

In some embodiments, the cooking control method further comprises:
if the steam temperature is less than the first temperature threshold, controlling the circulation fan to stop working.

When the cooking device does not enter the first cooking stage, that is, when the steam temperature is less than the first temperature threshold, the liquid in the cooking pot is difficult to generate bubbles, and the circulation fan can stop working to reduce energy consumption of the cooking device. In addition, stopping the circulation fan can also reduce heat loss, allowing the cooking device to enter the first cooking stage faster, and increasing the cooking speed of the cooking device.

In the cooking control method provided by the embodiment of the present application, when the steam temperature is less than the first temperature threshold, the cooking device determines that it has not entered the first cooking stage at this time, and it is difficult to generate bubbles in the cooking pot. In order to reduce energy consumption, the circulation fan may or may not work. Moreover, when the circulation fan is working, the circulation fan works in the first mode with lower power consumption to stir the air or liquid in the cooking pot, so that the food can be heated more evenly, which helps to prevent staleness of food and improves the problem of partially cooked food.

In addition, the cooking device can adjust the duty cycle of the circulation fan during the first cooking stage.

In some embodiments, controlling the circulation fan to operate in the second mode in step 030 can comprise controlling the circulation fan to rotate periodically. That is, step 030 can comprise: if the steam temperature is greater than or equal to the first temperature threshold and less than the second temperature threshold, controlling the circulation fan to rotate periodically.

When the cooking device is in the first cooking stage, it takes a certain amount of time to generate bubbles in the cooking pot. Therefore, the cooking device can control the circulation fan to work periodically, which not only reduces the generation of bubbles, but also reduces the energy consumption of the cooking device.

In some embodiments, periodic rotation of the circulation fan can refer to operating at a preset interval.

As an example, the interval can be 10 seconds, then the circulation fan starts every 10 seconds.

As another example, the interval can be 20 seconds, and the circulation fan starts every 20 seconds.

In some embodiments, controlling the circulation fan to rotate periodically in step 030 can comprise controlling the circulation fan to rotate for a first period of time, and controlling the circulation fan to stop rotating for a second period of time, where the circulation fan rotates and stops alternately. That is, step 030 can comprise: if the steam temperature is greater than or equal to the first temperature threshold and less than the second temperature threshold, controlling the circulation fan to rotate for a first period of time, and controlling the circulation fan to stop rotating for a second period of time, where the circulation fan rotates and stops alternately.

In some embodiments, the first period of time and the second period of time can be preset.

In some embodiments, the first period of time and the second period of time can be equal or unequal. The first period of time can be longer than the second period of time, and can also be shorter than the second period of time.

As an example, the first period of time can be 10 seconds and the second period of time can be 10 seconds, and the circulation fan works alternately according to the time cycle of rotating for 10 seconds and stopping for 10 seconds.

As another example, the first period of time can be 10 seconds and the second period of time can be 20 seconds, and the circulation fan works alternately according to the time cycle of rotating for 10 seconds and stopping for 20 seconds.

Step 040, if the steam temperature is greater than or equal to the second temperature threshold, controlling the cooking device to enter the second cooking stage.

The power of the heating device in the second cooking stage is less than the power in the first cooking stage.

When the steam temperature is greater than or equal to the second temperature threshold, the first cooking stage is completed, and the cooking device enters the second cooking stage. It can be understood that the circulation fan can stop working at this time, or can work according to the operation mode of the second cooking stage.

In some embodiments, a cooking device can have multiple cooking stages when cooking. Taking rice cooking as an example, the cooking device can have a detection stage, a heating stage, a boiling stage, a rice stewing stage, etc. in sequence when cooking rice. During the detection stage, the cooking device can detect whether the water level in the cooking pot exceeds the water level, or whether the pot cover and the pot body are tightly closed, or whether the exhaust hole is blocked, etc. The first cooking stage can refer to the heating stage, and the second cooking stage can refer to the boiling stage.

In some embodiments, the heating power of the heating device can be different in multiple cooking stages. For example, the heating power of the heating device during the heating stage can be greater than the heating power during other cooking stages.

It can be understood that in the heating stage, in order to make the food enter the boiling stage faster, the heating device is in a full power operating state or close to a full power operating state, and the heating power of the heating device is high. When the steam temperature is close to the second temperature threshold, bubbles tend to form in the cooking pot. The cooking device can control the operation of circulation fans to stir the air in the cooking pot and reduce or destroy the generation of bubbles.

In the cooking control method provided by the embodiment of the present application, the cooking control method is applied to the cooking device. The cooking device comprises a pot body, a cooking pot, a heating device and a circulation fan located in the pot body. The heating device is located between the cooking pot and the pot body. The circulation fan is opposite to the opening of the cooking pot. The cooking control method comprises: in response to the cooking signal, controlling the heating device to heat the cooking pot, so that the cooking device enters the first cooking stage; obtaining the steam temperature in the cooking pot; if the steam temperature is greater than or equal to the first temperature threshold and less than the second temperature threshold, controlling the circulation fan to operate; if the steam temperature is greater than or equal to the second temperature threshold, controlling the cooking device to enter the second cooking stage, and the power of the heating device in the second cooking stage is less than that in the first cooking stage, so that the cooking device controls the circulation fan to rotate when the steam temperature is greater than or equal to the first temperature threshold and less than the second temperature threshold. At this time, if the steam temperature is close to the first temperature threshold, when the circulation fan rotates, it can drive the air flow in the cooking pot to achieve the effect of preventing staleness of food, and can also stir the liquid and food (such as rice grains) in the cooking pot to allow the food to roll in the liquid, so that the food is heated more evenly and the problem of partially cooked food is improved. When the steam temperature is close to the second temperature threshold, bubbles are easily generated in the cooking pot. When the circulation fan rotates, it can drive the air flow in the cooking pot to destroy the bubbles.

In some embodiments, the cooking control method can also comprise the following steps:
if the steam temperature is greater than or equal to the first temperature threshold and less than the second temperature threshold, obtaining the heating time of the heating device; and
if the heating time is greater than or equal to a preset duration, controlling the cooking device to enter the second cooking stage.

When the cooking device is cooking, by simultaneously monitoring the steam temperature and heating time, the working stage of the cooking device can be more accurately determined, so as to more accurately control the working status of the circulation fan.

When the cooking device is cooking, when the steam temperature is greater than or equal to the first temperature threshold and less than the second temperature threshold, since there is a certain difference between the steam temperature and the actual temperature of the liquid in the cooking pot, or since the temperature detection unit is aging or damaged to cause the detected steam temperature to be inaccurate, it leads to control errors of the circulation fan. At this time, the cooking device can determine the cooking stage of the cooking device based on the heating time of the heating device. When the heating time reaches the preset duration, the cooking device determines that the first cooking stage has been completed, at this time, the cooking device is in the second cooking stage, and the circulation fan is controlled to stop working, or to work in the operating mode of the second cooking stage.

In some embodiments, the heating time can be preset according to needs. Alternatively, the heating time can be greater than or equal to 30 minutes and less than or equal to 50 minutes. For example, the heating time can be 30min, 35min, 43min or 50min, etc.

In some embodiments, the cooking control method can also comprise:
if the heating time is less than the preset duration, reacquiring the steam temperature in the cooking pot.

When the heating time is less than the preset duration, the cooking device determines that it should still be in the first cooking stage, and bubbles may still appear in the cooking pot. The cooking device reacquires the steam temperature. At this time, the circulation fan is still in the working state, which helps to destroy the bubbles in the cooking pot.

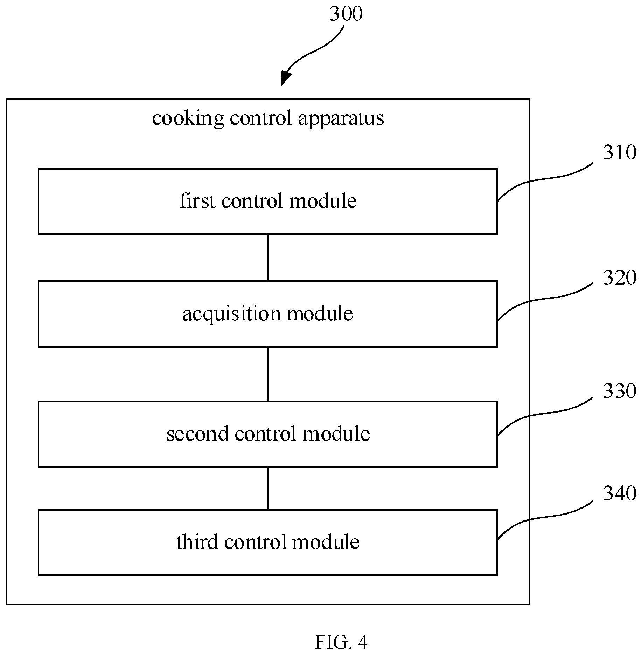

Please refer to FIG. 4, the embodiment of the present application also provides a cooking control apparatus 300. The cooking control apparatus 300 is applied to the cooking device. The cooking device comprises a pot body, and a cooking pot, a heating device and a circulation fan located in the pot body. The heating device is located between the cooking pot and the pot body, and the circulation fan is opposite to the opening of the cooking pot. The cooking control apparatus 300 can be used to perform any step in the cooking control method of any of the above embodiments. For example, the cooking control apparatus 300 comprises a first control module 310, an acquisition module 320, a second control module 330, and a third control module 340.

The first control module 310 is configured to control the heating device to heat the cooking pot in response to the cooking signal, so that the cooking device enters the first cooking stage.

The acquisition module 320 is configured to acquire the steam temperature in the cooking pot.

The second control module 330 is configured to control the circulation fan to operate if the steam temperature is greater than or equal to the first temperature threshold and less than the second temperature threshold.

The third control module 340 is configured to control the cooking device to enter the second cooking stage if the steam temperature is greater than or equal to the second temperature threshold, and the power of the heating device in the second cooking stage is smaller than the power in the first cooking stage.

In some embodiments, the second control module 330 is also configured to control the circulation fan to work in the first mode if the steam temperature is less than the first temperature threshold; and control the circulation fan to work in the second mode if the steam temperature is greater than or equal to the first temperature threshold and less than the second temperature threshold.

In some embodiments, the second control module 330 is also configured to control the circulation fan to rotate periodically if the steam temperature is greater than or equal to the first temperature threshold and less than the second temperature threshold.

In some embodiments, the second control module 330 is also configured to control the circulation fan to rotate for a first period of time and control the circulation fan to stop rotating for a second period of time if the steam temperature is greater than or equal to the first temperature threshold and less than the second temperature threshold. The circulation fan rotates and stops rotating alternately.

In some embodiments, the second control module 330 is also configured to control the circulation fan to stop working if the steam temperature is less than the first temperature threshold.

In some embodiments, the second control module 330 is also configured to obtain the heating time of the heating device if the steam temperature is greater than or equal to the first temperature threshold and less than the second temperature threshold. The third control module 340 is also configured to control the cooking device to enter the second cooking stage if the heating time is greater than or equal to the preset duration.

In some embodiments, the acquisition module 320 is also configured to reacquire the steam temperature in the cooking pot if the heating time is less than the preset duration.

It should be noted that, as for the device embodiment, since it is basically similar to the method embodiment, the description is relatively simple. For relevant details, please refer to the partial description of the method embodiment. Any processing method described in the method embodiment can be implemented by corresponding processing modules in the device embodiment, and will not be described one by one in the device embodiment.

Those skilled in the art can clearly understand that for the convenience and simplicity of description, the specific working processes of the above-described devices and modules can refer to the corresponding processes in the foregoing method embodiments, and will not be described again here.

In several embodiments provided in the present application, the coupling between modules can be electrical, mechanical or other forms of coupling.

In addition, each functional module in each embodiment of the present application can be integrated into one processing module, or can exist physically alone, or two or more modules can be integrated into one module. The above integrated modules can be implemented in the form of hardware or software function modules.

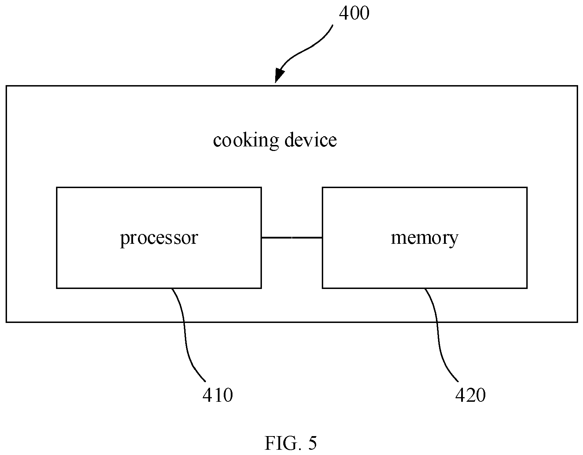

Referring to FIG. 5, based on the above cooking control method, an embodiment of the present application also provides a cooking device 400 that can perform the above cooking control method.

The cooking device 400 comprises a pot body, and a cooking pot, a heating device and a circulation fan located in the pot body. The heating device is located between the cooking pot and the pot body, and the circulation fan is opposite to the opening of the cooking pot.

The cooking device 400 further comprises at least one processor 410 and a memory 420, and can further comprise a touch pad (not shown in the figure), a touch screen (not shown in the figure), and a wireless communication module (not shown in the figure), one or more application programs. One or more application programs can be stored in the memory 420 and configured to be executed by one or more processors 410, and the one or more programs are configured to perform the method as described in the foregoing method embodiments.

The processor 410 can comprise one or more processing cores. The processor 410 uses various interfaces and lines to connect various parts of the entire cooking device 400, and executes various functions and processing data of the cooking device 400 by running or executing instructions, programs, code sets or instruction sets stored in the memory 420, and calling data stored in the memory 420.

In an embodiment, the processor 410 can adopt at least one hardware form of digital signal processing (DSP), field-programmable gate array (FPGA), and programmable logic array (PLA). The processor 410 can integrate one or a combination of a central processing unit (CPU), a graphics processing unit (GPU), a modem, etc. The CPU mainly handles the operating system, user interface, and applications; the GPU is responsible for rendering and drawing the display content; and the modem is used to handle wireless communications. It can be understood that the above-mentioned modem may not be integrated into the processor 410 and may be implemented solely through a communication chip.

The memory 420 can comprise random access memory (RAM) or read-only memory (ROM). The memory 420 can be used to store instructions, programs, codes, sets of codes, or sets of instructions. The memory 420 can comprise a program storage area and a data storage area, the program storage area can store instructions for implementing an operating system, instructions for implementing at least one function, instructions for implementing various method embodiments described below, and the like. The data storage area can also store data created during use of the terminal, etc.

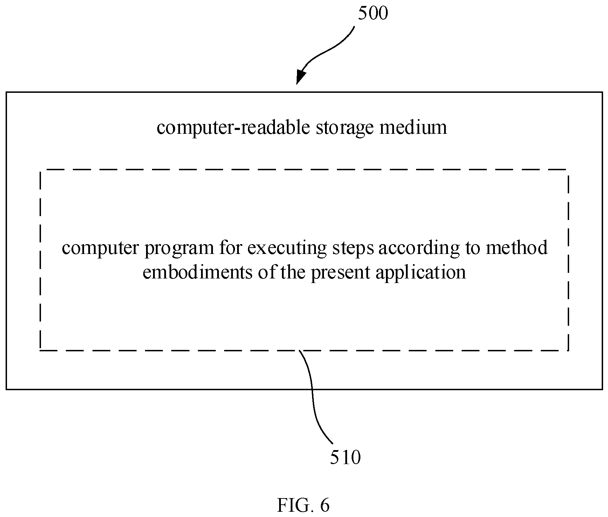

Please refer to FIG. 6, an embodiment of the present application also provides a computer-readable storage medium 500. The computer-readable storage medium 500 stores program code 510, and the program code 510 can be called by the processor to execute the cooking control method described in the above method embodiment.

The computer-readable storage medium 500 can be electronic memory such as flash memory, electrically erasable programmable read-only memory (EEPROM), EPROM, hard disk, or ROM. In an embodiment, the computer-readable storage medium 500 comprises a non-transitory computer-readable storage medium. The computer-readable storage medium 500 has storage space for the program code 510 that performs any method steps in the above-mentioned methods. These program codes can be read from or written into one or more computer program products. The program code 510 can be compressed in an appropriate form.

Finally, it should be noted that the above embodiments are only used to illustrate the technical solution of the present application, but not to limit it. Under the idea of the present application, the technical features of the above embodiments or different embodiments can also be combined. The steps can be performed in any order, and there are many other variations to different aspects of the present application as described above, which are not provided in detail for the sake of brevity. Although the present application has been described in detail with reference to the foregoing embodiments, those skilled in the art should understand that the technical solutions described in the foregoing embodiments can still be modified, or some of the technical features can be equivalently replaced. However, these modifications or substitutions do not cause the essence of the corresponding technical solutions to deviate from the scope of the present application. Through the description of the above embodiments, those skilled in the art can clearly understand that each embodiment can be implemented by means of software plus a general hardware platform, and of course by hardware. Those skilled in the art can understand that all or part of the processes in the methods of the above embodiments can be implemented by instructing relevant hardware through program codes. The program can be stored in a computer-readable storage medium. When the program is executed, the processes of the embodiments of the above methods can be comprised. The storage medium can be a magnetic disk, an optical disk, a read-only memory (ROM) or a random access memory (RAM), etc.

## Claims

1. A cooking control method, applied to a cooking device, wherein the cooking device comprises a pot body, and a cooking pot, a heating device and a circulation fan located in the pot body, wherein the heating device is located between the cooking pot and the pot body, and the circulation fan is opposite to an opening of the cooking pot,
the cooking control method comprising:
(S010) in response to a cooking signal, controlling the heating device to heat the cooking pot, so that the cooking device enters a first cooking stage;
(S020) acquiring a steam temperature in the cooking pot;
(S030) controlling the circulation fan to operate, in response to that the steam temperature is greater than or equal to a first temperature threshold and less than a second temperature threshold; or
(S040) controlling the cooking device to enter a second cooking stage, in response to that the steam temperature is greater than or equal to the second temperature threshold, wherein power of the heating device in the second cooking stage is less than power in the first cooking stage.

2. The cooking control method according to claim 1, further comprising:
in response to that the steam temperature is less than the first temperature threshold, controlling the circulation fan to work in a first mode;
the in response to that the steam temperature is greater than or equal to the first temperature threshold and less than the second temperature threshold, controlling the circulation fan to work, comprises:
in response to the steam temperature is greater than or equal to the first temperature threshold and less than the second temperature threshold, controlling the circulation fan to work in a second mode, wherein an average rotation speed of the circulation fan in the second mode is greater than an average rotation speed in the first mode.

3. The cooking control method according to claim 2, wherein the controlling the circulation fan to work in the second mode comprises:
controlling the circulation fan to rotate periodically.

4. The cooking control method according to claim 3, wherein the controlling the circulation fan to rotate periodically comprises:
controlling the circulation fan to rotate for a first period of time, and controlling the circulation fan to stop rotating for a second period of time, wherein the circulation fan rotates and stops rotating alternately.

5. The cooking control method according to claim 1, further comprising:
in response to that the steam temperature is less than the first temperature threshold, controlling the circulation fan to stop working.

6. The cooking control method according to claim 1, further comprising:
in response to that the steam temperature is greater than or equal to the first temperature threshold and less than the second temperature threshold, acquiring a heating time of the heating device; and
in response to that the heating time is greater than or equal to a preset duration, controlling the cooking device to enter the second cooking stage.

7. The cooking control method according to claim 6, further comprising:
in response to that the heating time is less than the preset duration, reacquiring the steam temperature in the cooking pot.

8. A cooking control apparatus (300), applied to a cooking device, wherein the cooking device comprises a pot body, and a cooking pot, a heating device and a circulation fan located in the pot body, wherein the heating device is located between the cooking pot and the pot body, and the circulation fan is opposite to an opening of the cooking pot,
the cooking control apparatus comprising:
a first control module (310), controlling the heating device to heat the cooking pot in response to a cooking signal, so that the cooking device enters a first cooking stage;
an acquisition module (320), acquiring a steam temperature in the cooking pot;
a second control module (330), controlling the circulation fan to work in response to that the steam temperature is greater than or equal to a first temperature threshold and less than a second temperature threshold; and
a third control module (340), controlling the cooking device to enter a second cooking stage in response to that the steam temperature is greater than or equal to the second temperature threshold, wherein power of the heating device in the second cooking stage is less than power in the first cooking stage.

9. A cooking device (100), **characterized by** comprising:
a pot body (110);
a cooking pot (120), a heating device (130) and a circulation fan (140) located in the pot body (110), wherein the heating device (130) is located between the cooking pot (120) and the pot body (110), and the circulation fan (140) is opposite to an opening of the cooking pot (120);
at least one processor (410); and
a memory (420) communicated with the at least one processor (410);
wherein an instruction executable by the at least one processor (410) is stored in the memory (420), and the instruction is executed by the at least one processor (410) to enable the at least one processor (410) to perform a cooking control method according to any one of claims 1 to 7.

10. A computer-readable storage medium (500), **characterized in that** program code (510) is stored in the computer-readable storage medium (500), wherein the program code (510) is called by a processor (410) to perform a cooking control method according to any one of claims 1 to 7.
